(19) Europäisches Patentamt
European Patent Office
Office européen des brevets

(11) EP 2 813 729 A1

(12) **EUROPEAN PATENT APPLICATION**
published in accordance with Art. 153(4) EPC

(43) Date of publication:
**17.12.2014 Bulletin 2014/51**

(51) Int Cl.:
*F16F 15/14* (2006.01)     *F16F 15/10* (2006.01)
*F16F 15/131* (2006.01)     *F16H 45/02* (2006.01)

(21) Application number: **12867772.1**

(22) Date of filing: **10.02.2012**

(86) International application number:
**PCT/JP2012/053120**

(87) International publication number:
**WO 2013/118293 (15.08.2013 Gazette 2013/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Toyota Jidosha Kabushiki Kaisha
Toyota-shi, Aichi 471-8571 (JP)**

(72) Inventors:
• **HORITA Shuhei
Toyota-shi
Aichi 471-8571 (JP)**

• **MIYAHARA, Yu
Toyota-shi
Aichi 471-8571 (JP)**
• **AIJIMA, Shingo
Toyota-shi
Aichi 471-8571 (JP)**

(74) Representative: **Albutt, Anthony John
D Young & Co LLP
120 Holborn
London EC1N 2DY (GB)**

(54) **TORSIONAL OSCILLATION DAMPING DEVICE**

(57)     A torsional vibration damping device that can ensure a space for allowing a mass body to make reciprocating movements and can improve the vibration damping performance is provided.

A torsional vibration damping device 1 in which a mass body 3 is attached to a rotating body 2 by two support pins 5R and 5L includes two first hollow portions 4 which are formed in the rotating body 2 at positions corresponding to the respective support pins 5R and 5L and into which the respective support pins 5R and 5L are inserted, and two second hollow portions 7 which are formed in the mass body 3 at positions opposed to the respective first hollow portions 4 and into which the respective support pins 5R and 5L are inserted. Outer sides of inner peripheral edges of respective the first hollow portions 4 in a radial direction of the rotating body 2 serve as guide faces 6R and 6L. Inner sides of inner peripheral edges of the respective second hollow portions 7 in the radial direction of the rotating body 2 serve as attachment faces 8R and 8L. The guide faces 6R and 6L and the attachment faces 8R and 8L are formed as recessed curved faces. A distance $D_1$ between centers $O_1$ of curvature of the guide faces 6R and 6L is shorter than a distance $D_2$ between centers $O_2$ of curvature of the attachment faces 8R and 8L.

FIG. 1

## Description

TECHNICAL FIELD

This invention relates to a device for damping torsional vibrations of a rotating body such as a crankshaft, a power transmission shaft or the like. In particular, this invention relates to a device that is configured such that a mass body that makes reciprocating movements through torsional vibrations is attached to a rotating body, and that torsional vibrations of the rotating body are damped through the reciprocating movements of the mass body.

BACKGROUND ART

A rotating body such as a drive shaft or the like for transmitting a torque generated by a driving force source may vibrate due to fluctuations in an input torque itself, fluctuations in a torque for driving an instrument coupled to the rotating body, or the like. Such fluctuations in the torque affect the rotating body as torsional vibrations. A device for damping torsional vibrations of such a rotating body has been developed. An example of the device is described in Published Japanese Translation of PCT Application No. 2011-504987 (JP-2011-504987 A) or Published Japanese Translation of PCT Application No. 2011-504986 (JP-2011-504986 A).

A dynamic vibration absorber described in each of these gazettes is attached, by two support pins, to a rotating body that receives torsional vibrations, such that a mass body that makes reciprocating movements through torsional vibrations can rock. The support pins are inserted in guide holes that are formed through the rotating body, and attachment holes that are formed through the mass body at positions opposed to the aforementioned guide holes, respectively. Faces of inner peripheral edges of the guide holes that are located on an outer side in a radial direction with respect to a rotation center of the rotating body serve as guide faces. Faces of inner peripheral edges of the attachment holes that are located on an inner side in the radial direction with respect to the rotation center of the rotating body serve as attachment faces. The respective guide faces and the respective attachment faces are formed as recessed curved faces with a certain curvature. Besides, the distance between centers of curvature of the respective guide faces and the distance between centers of curvature of the respective attachment faces are equal to each other. Then, if the mass body rotates together with the rotating body and is pressed toward an outer peripheral side of the rotating body due to the application of a centrifugal force, there is established a state where the mass body is attached to the rotating body with the support pins sandwiched by the guide faces and the attachment faces respectively. Then, if an inertial force in a circumferential direction is applied to the mass body due to torsional vibrations of the rotating body, the support pins roll on the guide faces and the attachment faces respectively, and the mass body makes reciprocating movements.

Besides, in the aforementioned dynamic vibration absorber, in the case where the mass body makes reciprocating movements due to torsional vibrations of the rotating body, a tangential line that passes through a contact point between one of the support pins and one of the guide faces that is in contact therewith is always parallel to a tangential line that passes through a contact point between the other support pin and the other guide face that is in contact therewith. That is, a line that links axes of rotation of the support pins, which roll on the guide faces respectively, with each other, and a line that links centers of curvature of the two attachment faces, which are formed on the mass body, with each other apparently move parallel to the rotating body. Thus, in the aforementioned dynamic vibration absorber, in the case where the amplitude of the mass body is large, part of the mass body may protrude outward from an outer peripheral edge of the rotating body. Thus, a large space must be ensured on an outer peripheral side of the rotating body so as to prevent the mass body from interfering with surrounding members. As a result, the device may be increased in size. In contrast, if the amplitude of the mass body is forcibly held small through the use of a stopper or the like instead of ensuring such a space, the device can be prevented from being increased in size, but the reciprocating movement order of the mass body changes, and expected vibration damping performance may not be obtained. In addition, the number of manhour and the cost of manufacture may increase due to an increase in the number of parts. On the other hand, it is also conceivable to reduce the size of the mass body with a view to preventing the mass body from protruding outward from the outer peripheral edge of the rotating body. However, this may lead to a deficiency of the mass of the mass body and hence to a deterioration in vibration damping performance.

SUMMARY OF THE INVENTION

This invention has been made in view of the aforementioned technical problems. It is an object of this invention to provide a torsional vibration damping device that can restrain a mass body from protruding from a rotating body and hence can be reduced in size.

In order to achieve the aforementioned object, this invention provides a torsional vibration damping device in which a mass body that allows a centrifugal force to be generated through rotation of a rotating body, which rotates upon receiving a torque, and that is caused to make pendular movements through torsional vibrations of the rotating body is attached to the rotating body in such a manner as to rock with respect to the rotating body by two support pins that are spaced apart from each other in a circumferential direction of the rotating body, on an outer peripheral side of the rotating body in a radial direction with respect to a rotation center of the rotating body. The torsional vibration damping device is characterized in that the torsional vibration damping device includes two first hollow portions which are formed in an outer peripheral portion of the rotating body at positions corresponding to the respective support pins and into which the respective support pins are inserted, and two second hollow portions which are formed in the mass body at positions opposed to the respective first hollow portions and into which the respective support pins are inserted, that guide faces on which the respective support pins roll are formed on outer sides of inner peripheral edges of the respective first hollow portions in a radial direction with respect to a rotation center of the rotating body, that attachment faces on which the respective support pins roll are formed on inner sides of inner peripheral edges of the respective second hollow portions in the radial direction with respect to the rotation center of the rotating body, wherein each of the support pins is sandwiched between the corresponding attachment face and the corresponding guide face in a case where the mass body has received a load directed toward an outer peripheral side of the rotating body due to the centrifugal force, that each of the guide faces and each of the respective attachment faces are formed as recessed curved faces in such a manner as to enclose the corresponding support pin inside, and that a distance between centers of curvature of the guide faces is shorter than a distance between centers of curvature of the attachment faces.

In this invention, the respective guide faces may be formed as recessed curved faces with a certain curvature, or as recessed curved faces in which a curvature of one of the guide faces with which one of the support pins is in contact and a curvature of the other guide face with which the other support pin is in contact are different from each other in a case where the mass body makes reciprocating movements. Besides, the respective attachment faces may be formed as recessed curved faces with a certain curvature, or as recessed curved faces in which a curvature of one of the attachment faces with which one of the support pins is in contact and a curvature of the other attachment face with which the other support pin is in contact are different from each other in a case where the mass body vibrates.

Besides, in this invention, it is possible to adopt a configuration in which the rotating body and the mass body are accommodated inside a casing of a fluid coupling.

Furthermore, in this invention, a ratio of a distance between the rotation center of the rotating body and a fulcrum of reciprocating movements of the mass body to a distance between the fulcrum of reciprocating movements of the mass body and a center of gravity of the mass body may be set to "1" or "4".

According to this invention, in the case where the rotating body undergoes torsional vibrations with the support pins sandwiched by the guide faces and the attachment faces respectively, the mass body is caused to make reciprocating movements along the circumferential direction of the rotating body. The aforementioned reciprocating movements of the mass body can be described as follows. In this invention, the distance between the centers of curvature of the guide faces with which the support pins are in contact respectively is shorter than the distance between the centers of curvature of the attachment faces with which the support pins are in contact respectively. Thus, for example, in the case where the mass body has swung toward one side in the circumferential direction of the rotating body, the distance between the support pin on one side and the rotation center of the rotating body is shorter than the distance between the support pin on the other side and the rotation center of the rotating body. That is, the support pin on one side rolls on the guide face on one side in such a manner as to be entangled toward the rotation center of the rotating body in comparison with the support pin on the other side. This difference between displacement of the support pin on one side and displacement of the support pin on the other side remains unchanged in the case where the mass body has swung toward the other side as well. In other words, the mass body makes reciprocating movements such that a line that links axes of rotation of the two support pins with each other and a line that links the centers of curvature of the respective attachment faces with each other rotate with respect to the rotation center of the rotating body. In this manner, according to this invention, the mass body can be caused to make reciprocating movements along the circumferential direction of the rotating body, so that part of the mass body can be restrained from protruding outward from the outer peripheral edge of the rotating body even in the case where the amplitude of the mass body is large. That is, according to this invention, the amplitude of the mass body can be maintained even in the case where the amplitude is large, and hence, expected vibration damping performance can be obtained. Besides, in order not to reduce the mass of the mass body, the vibration damping performance can be prevented or restrained from deteriorating due to a small mass of the mass body.

Besides, if a configuration in which the rotating body and the mass body in this invention are immersed in oil and the mass body makes reciprocating movements in oil is adopted, the support pins and the guide faces may collide with each other respectively or the support pins and the attachment faces may collide with each other respectively due to a sudden change in the torque transmitted by the rotating body or the like, but the impact of the collision can be reduced by oil. Thus, vibrations and abnormal noise can be prevented or restrained from being caused due to a collision as described above.

Furthermore, in this invention, in the case where the ratio of the distance between the rotation center of the rotating body and the fulcrum of reciprocating movements of the mass body to the distance between the fulcrum of reciprocating movements of the mass body and the center of gravity of the mass body is set to "1", torsional vibrations of an output shaft of an engine that generates a torque through the use of two cylinders and a rotary shaft that is connected to the output shaft in a manner enabling power transmission can be damped. On the other hand, in the case where the foregoing ratio is set to "4", torsional vibrations of the output shaft of the engine that generates a torque through the use of four cylinders and the rotary shaft that is connected to the output shaft in a manner enabling power transmission can be damped.

## BRIEF DESCRIPTION OF THE DRAWINGS

[FIG. 1] FIG. 1 is a view showing, on a partially enlarged scale, an example of a torsional vibration damping device according to this invention, and is a view showing a state where a centrifugal force is applied to a mass body that is attached in such a manner as to rock with respect to a rotating body and no force in a circumferential direction of the rotating body is applied to the mass body.

[FIG. 2] FIG. 2 is a view schematically showing a cross-section of the torsional vibration damping device in a state shown in FIG. 1.

[FIG. 3] FIG. 3 is a view for illustrating the magnitude of a load of the mass body that is applied to respective contact points $C_1$ and $C_2$ at a neutral position.

[FIG. 4] FIG. 4 is a view schematically showing a state where the mass body has swung toward one side in the circumferential direction of the rotating body in the torsional vibration damping device shown in FIG. 1.

[FIG. 5] FIG. 5 is a view schematically showing a state where the mass body of the torsional vibration damping device shown in FIG. 1 makes reciprocating movements.

[FIG. 6] FIG. 6 is a view schematically showing a state where a plurality of mass bodies are attached in the circumferential direction of the rotating body.

[FIG. 7] FIG. 7 is a view schematically showing an example in which part of the configuration of the torsional vibration damping device shown in FIG. 1 is changed.

[FIG. 8] FIG. 8 is a view schematically showing a state where the mass body shown in FIG. 7 makes reciprocating movements.

[FIG. 9] FIG. 9 is a view schematically showing another example in which part of the configuration of the torsional vibration damping device shown in FIG. 1 is changed.

[FIG. 10] FIG. 10 is a view schematically showing still another example in which part of the configuration of the torsional vibration damping device shown in FIG. 1 is changed.

[FIG. 11] FIG. 11 is a view schematically showing an example in which part of the configuration of the torsional vibration damping device shown in FIG. 7 is changed.

[FIG. 12] FIG. 12 is a view schematically showing an example in which part of the configuration of the torsional vibration damping device shown in FIG. 9 is changed.

[FIG. 13] FIG. 13 is a view schematically showing an example in which a fluid coupling has the torsional vibration damping device according to this invention built therein.

## MODE FOR CARRYING OUT THE INVENTION

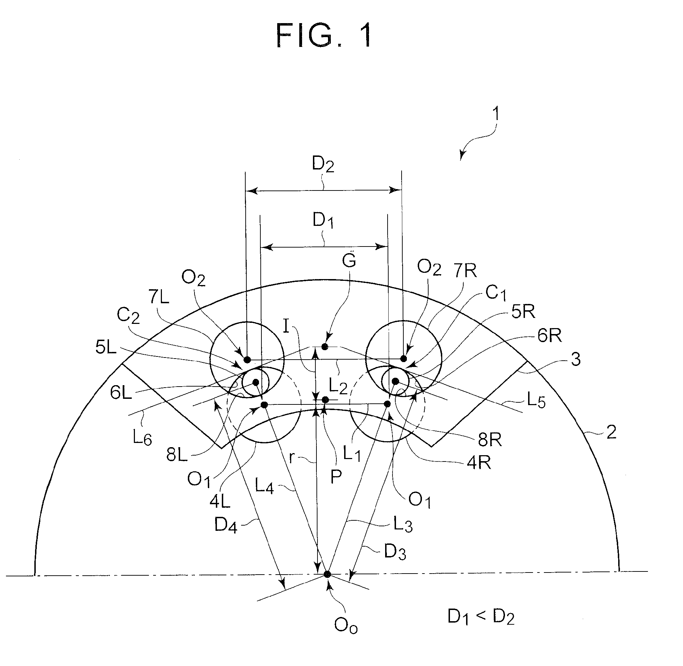

Next, this invention will be described more specifically. FIG. 1 is a view showing, on a partially enlarged scale, an example of a torsional vibration damping device 1 according to this invention, and schematically shows a state where a centrifugal force is applied to mass bodies 3 that are attached rockably with respect to a rotating body 2, and no force in a circumferential direction of the rotating body 2 is applied to the mass bodies 3. The rotating body 2 is a circular plate-like member as an example, and is configured to rotate integrally with rotary shafts such as an output shaft of an engine (not shown), an input shaft of a transmission (not shown), and the like. In the example shown in FIG. 1, a pair of first hollow portions 4R and 4L are formed at intervals of a predetermined gap in the circumferential direction, on an outer peripheral side of the rotating body 2. The respective first hollow portions 4R and 4L are formed in the shape of a hollow cylinder as an example. The distance between a center of curvature of each of the first hollow portions 4R and 4L and a rotation center $O_0$ of the rotating body 2 is set to a predetermined distance.

Each of support pins 5R and 5L is inserted in a hollow region of a corresponding one of the first hollow portions 4R and 4L. The support pins 5R and 5L are formed in the shape of a circular cylinder as an example, and are formed such that the outer diameter thereof is smaller than the opening width of the first hollow portions 4R and 4L. Inner wall faces of inner peripheral edges of the first hollow portions 4R and 4L on an outer peripheral side in a radial direction with respect to the rotation center $O_0$ of the rotating body 2 serve as guide faces 6R and 6L on which the support pins 5R and 5L roll, respectively. In the example shown in FIG. 1, the respective guide faces 6R and 6L are formed as circular arc faces with a certain curvature. Centers $O_1$ of curvature of these guide faces 6R and 6L are at predetermined locations that are offset outward in the radial direction with respect to the rotation center $O_0$ of the rotating body 2, and coincide with the centers of curvature of the aforementioned first hollow portions 4R and 4L, respectively. Incidentally, for example, the guide faces 6R and 6L can also be formed as cycloid faces with continuously changing centers of curvature, namely, continuously changing instantaneous centers of faces with which the support pins 5R and 5L that roll on the guide faces 6R and 6L respectively are in contact at a specific time point. Even if the guide faces 6R and 6L are cycloid faces, the centers of curvature thereof are at predetermined locations that are offset outward in the radial direction with respect to the rotation center $O_0$ of the rotating body 2. Incidentally, the respective support pins 5R and 5L are also configured to roll on attachment faces 8R and 8L, which will be described later, respectively.

The mass bodies 3 are formed in a shape curved like a fan as an example. In FIG. 1, an outermost region of an outer peripheral edge of each of the mass bodies 3 in the radial direction of the rotating body 2 is configured to be located substantially at the same position as the outer peripheral edge of the rotating body 2 or to be located inside the outer peripheral edge of the rotating body 2 in the radial direction of the rotating body 2. Second hollow portions 7R and 7L are formed in each of the mass bodies 3 at positions opposed to the first hollow portions 4R and 4L respectively. The aforementioned support pins 5R and 5L are inserted in hollow regions of the second hollow portions 7R and 7L respectively. That is, the support pins 5R and 5L are inserted over the first hollow portions 4R and 4L and the second hollow portions 7R and 7L respectively. The opening width of the hollow regions of these second hollow portions 7R and 7L is larger than the outer diameter of the support pins 5R and 5L. Inner wall faces of inner peripheral edges of the second hollow portions 7R and 7L on an inner peripheral side in the radial direction with respect to the rotation center $O_0$ of the rotating body 2 serve as attachment faces 8R and 8L on which the support pins 5R and 5L roll respectively. The respective attachment faces 8R and 8L are formed as circular arc faces with a certain curvature. Centers $O_2$ of curvature of the respective attachment faces 8R and 8L are at predetermined locations that are offset outward in the radial direction with respect to the rotation center $O_0$ of the rotating body 2. The attachment faces 8R and 8L may be formed as cycloid faces as described above. Even if the attachment faces 8R and 8L are cycloid faces, the centers of curvature thereof are at predetermined locations that are offset outward in the radial direction with respect to the rotation center $O_0$ of the rotating body 2.

As shown in FIG. 1, the guide faces 6R and 6L and the attachment faces 8R and 8L are formed as recessed curved faces that are opposed to each other, respectively. The relative positions of these guide faces 6R and 6L and these attachment faces 8R and 8L will be described. The length of a line $L_1$ that links the centers $O_1$ of curvature of the guide faces 6R and 6L as the former faces with each other, namely, a distance (a gap) $D_1$ between those centers $O_1$ of curvature is shorter than the length of a line $L_2$ that links the centers $O_2$ of curvature of the attachment faces 8R and 8L as the latter faces with each other, namely, a distance (a gap) $D_2$ between those centers $O_2$ of curvature. Incidentally, although not shown in detail, with a view to preventing the support pins 5R and 5L inserted in the second hollow portions 7R and 7L respectively from falling out, it is appropriate to adopt a configuration in which those regions of the second hollow portions 7R and 7L which are open on the other side of the rotating body 2 are closed by cover members respectively. Besides, it is appropriate to adopt a configuration in which the support pins 5R and 5L are prevented from falling out from the second hollow portions 7R and 7L respectively by attaching flanges, whose outer diameter is larger than the opening width of the second hollow portions 7R and 7L, to both the ends of the support pins 5R and 5L respectively.

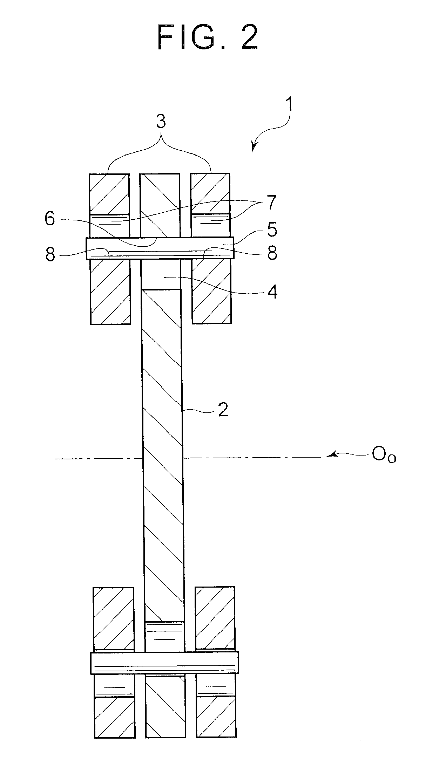

FIG. 2 schematically shows a cross-section of the torsional vibration damping device 1 in a state shown in FIG. 1. The mass bodies 3 are provided on both sides of the rotating body 2 respectively. The respective first hollow portions 4R and 4L are formed through, for example, the rotating body 2, and the respective second hollow portions 7R and 7L are formed through the mass bodies 3. In the case where a centrifugal force is applied, as shown in FIG. 2, there is established a state where the mass bodies 3 are attached to the rotating body 2 with the support pin 5R sandwiched by the guide face 6R and the attachment face 8R, and with the support pin 5L sandwiched by the guide face 6L and the attachment face 8L. Thus, in those regions in which the mass bodies 3 are attached to both the sides of the rotating body 2 respectively, three plate materials are arranged parallel to one another with a predetermined gap left therebetween respectively.

Next, the operation of the torsional vibration damping device 1 configured as described above will be described. In the case where the rotating body 2 has begun to rotate, the mass bodies 3 rotate together with the rotating body 2. As a result, a centrifugal force is applied to the mass bodies 3. Due to the centrifugal force, a load that is directed outward in the radial direction of the rotating body 2 is applied to the mass bodies 3. Due to an increase in the load above the force of gravity, the mass bodies 3 are moved outward in the radial direction of the rotating body 2. Then, in the case where no force directed in the circumferential direction of the rotating body 2 is applied to the mass bodies 3 or where the forces in the circumferential direction that are applied to the mass bodies 3 are equal to each other across the mass bodies 3, the mass bodies 3 are most distant from the rotation center $O_0$ of the rotating body 2, and the positional relationship between the mass bodies 3 and the rotating body 2 is as shown in FIG. 1. In such a state, the support pins 5R and 5L are sandwiched by the guide faces 6R and 6L and the attachment faces 8R and 8L respectively. The position of each of the mass bodies 3 in the state shown in FIG. 1 may be described as "a neutral position" in the following description. At the neutral position, as shown in FIG. 1, the length of a line $L_3$ that links an axis of rotation of the support pin 5R and the rotation center $O_0$ of the rotating body 2 with each other, namely, a distance $D_3$ therebetween and the length of a

line $L_4$ that links an axis of rotation of the support pin 5L and the rotation center $O_0$ of the rotating body 2 with each other, namely, a distance $D_4$ therebetween are equal to each other. Besides, the rotation center $O_0$ of the rotating body 2, a center of gravity G of each of the mass bodies 3, and a fulcrum P of reciprocating movements of each of the mass bodies 3 are aligned with one another. Incidentally, in FIG. 1, a tangential line $L_5$ that passes through a contact point $C_1$ between the support pin 5R and the guide face 6R, and a tangential line $L_6$ that passes through a contact point $C_2$ between the support pin 5L and the guide face 6L are illustrated.

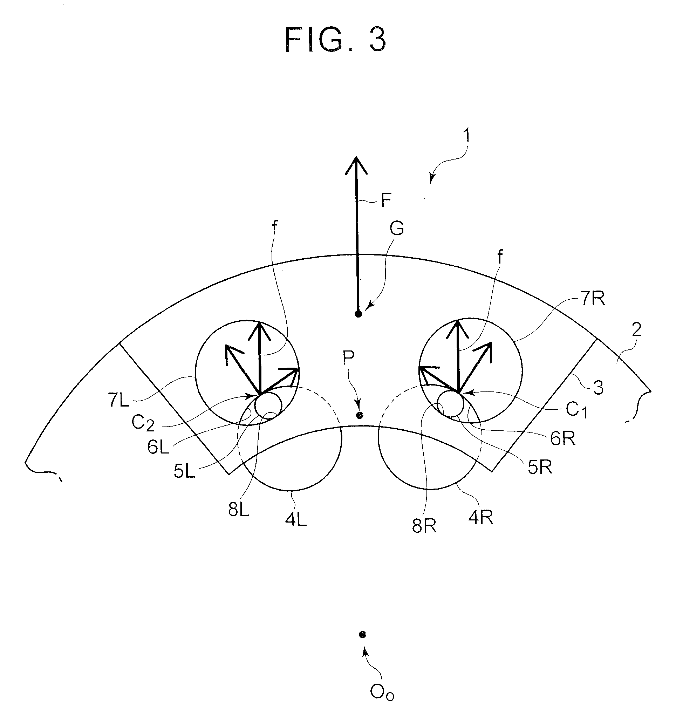

Incidentally, at the neutral position, as shown in FIG. 3, a centrifugal force F that is generated in each of the mass bodies 3 as the rotating body rotates is applied outward in the radial direction. Besides, the centrifugal force F of each of the mass bodies 3 is equally applied to the contact point $C_1$ and the contact point $C_2$. That is, a load f that is applied to each of the contact points $C_1$ and $C_2$ is half of the aforementioned centrifugal force F (f = F/2). As shown in FIG. 3, the direction of application of the load f resulting from the centrifugal force F at each of the contact points $C_1$ and $C_2$ and the direction of a normal line at each of the contact points form a predetermined angle, and therefore, the load in the direction of the normal line, namely, the contact pressure is smaller than the load f. That is, the surface pressure at each of the contact points $C_1$ and $C_2$ can be reduced, and hence the durability of the device can be enhanced.

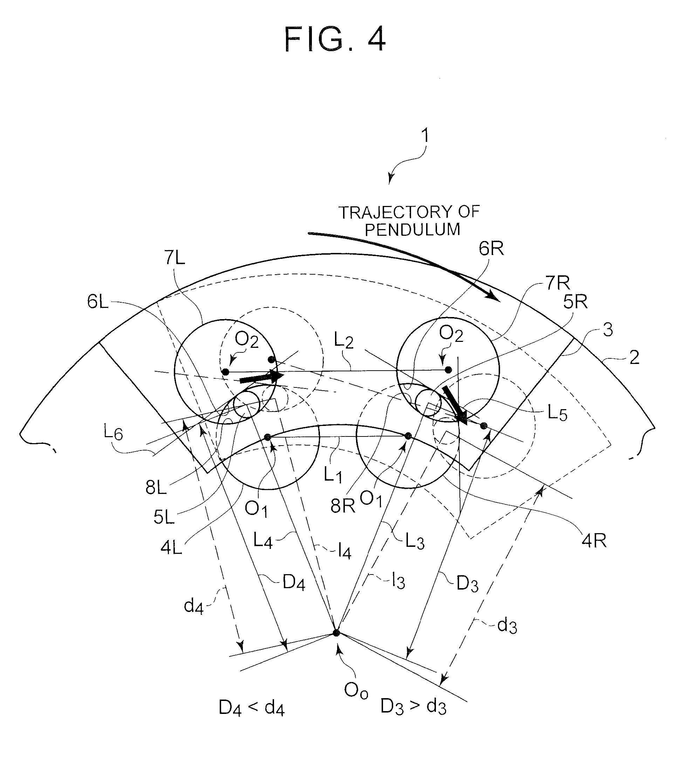

If the rotating body 2 undergoes torsional vibrations, a force is applied to a rotary shaft that is integrated with the rotating body 2, in such a manner as to twist the rotary shaft. That is, an inertial force is applied to each of the mass bodies 3 as an angular acceleration is generated in the rotating body 2. FIG. 4 schematically shows a state where each of the mass bodies 3 has swung toward one side in the circumferential direction of the rotating body 2. If each of the mass bodies 3 is offset rightward in FIG. 4 from the neutral position, the support pin 5R rolls on the guide face 6R rightward and downward in FIG. 4. That is, the support pin 5R rolls on the guide face 6R in such a manner as to approach the rotation center $O_0$ of the rotating body 2. In this manner, the length of a line $l_3$ that links the support pin 5R and the rotation center $O_0$ with each other in the case where the support pin 5R has thus rolled, namely, a distance $d_3$ therebetween is shorter than the distance $D_3$ at the neutral position. In contrast, the support pin 5L rolls on the guide face 6L rightward and upward in FIG. 4. That is, the support pin 5L rolls on the guide face 6L in such a manner as to move away from the rotation center $O_0$ of the rotating body 2. Thus, the length of a line $l_4$ that links the support pin 5L and the rotation center $O_0$ with each other in the case where the support pin 5L has thus rolled, namely, a distance $d_4$ therebetween is longer than the distance $D_4$ at the neutral position.

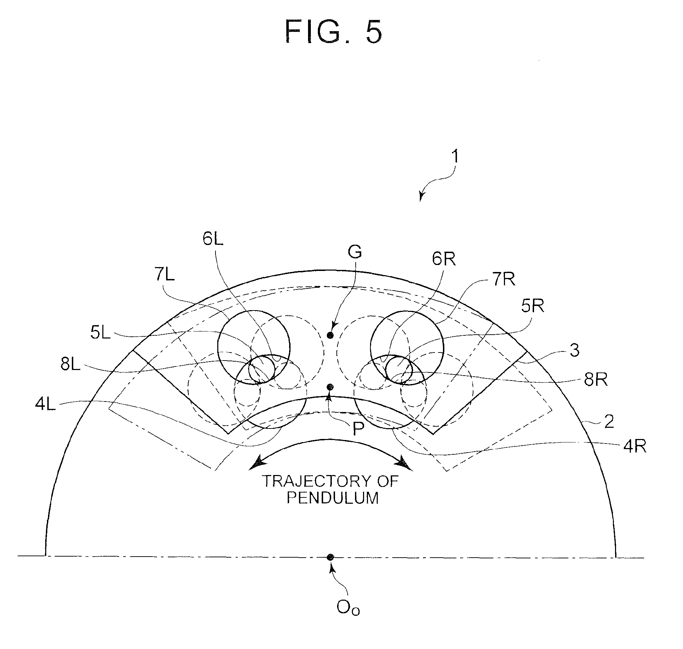

In a state where each of the mass bodies 3 has made reciprocating movements as described above, each of the mass bodies 3 rotates such that the right region of each of the mass bodies 3 is directed toward the rotation center $O_0$ side of the rotating body 2. Thus, as shown in FIG. 4, each of the mass bodies 3 moves in such a manner as to be entangled toward the rotation center $O_0$ side along the circumferential direction of the rotating body 2. Incidentally, although not shown in detail, in the case where each of the mass bodies 3 is offset leftward from the neutral position as well, each of the mass bodies 3 rotates such that the left region of each of the mass bodies 3 is directed toward the rotation center $O_0$ side of the rotating body 2 according to a similar principle. FIG. 5 schematically shows a state where each of the mass bodies 3 makes reciprocating movements. Incidentally, each of the mass bodies 3 thus makes reciprocating movements in the circumferential direction of the rotating body 2, whereby a vibration system other than the rotating body 2 is formed.

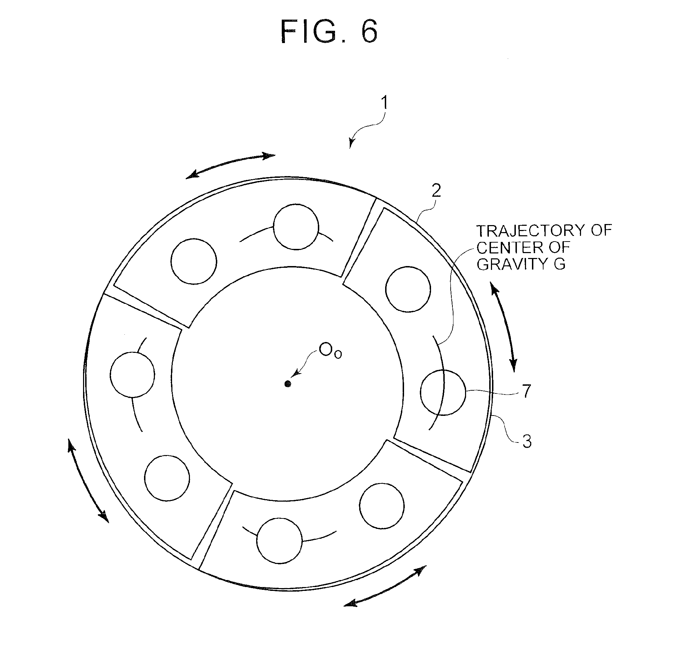

Accordingly, according to the torsional vibration damping device 1 configured as described above, each of the mass bodies 3 can be caused to make reciprocating movements along the circumferential direction of the rotating body 2. For example, by setting a reciprocating movement order n of each of the mass bodies 3 to "1", part of each of the mass bodies 3 can be restrained from protruding outward from the outer peripheral edge of the rotating body 2 even in the case where the amplitude of each of the mass bodies 3 is large. Thus, there is no special need to ensure a space in the circumferential direction of the rotating body 2, and the torsional vibration damping device 1 can be reduced in size. Besides, since there is no need to reduce the mass of the mass bodies, expected vibration damping performance can be obtained even in the case where the amplitude of each of the mass bodies 3 is large. Besides, according to this invention, even if a plurality of sets of the mass bodies 3 are attached in the circumferential direction of the rotating body 2 as shown in, for example, FIG. 6, adjacent sets of the mass bodies 3 vibrate in the same manner in the circumferential direction of the rotating body 2, and hence are unlikely to collide with each other. That is, since the mass bodies 3 are not prevented from vibrating in a reciprocating manner, expected vibration damping performance can be obtained even if the plurality of sets of the mass bodies 3 are attached to the rotating body 2. Since the mass bodies 3 are attached to the rotating body 2 by the two support pins 5R and 5L, the location where the loads of the mass bodies 3 are received can be dispersed into two locations. As a result, the durability of the torsional vibration damping device 1 can be enhanced in comparison with a case where the mass bodies 3 are attached to the rotating body 2 by a single support pin.

It should be noted herein that the reciprocating movement order n of each of the mass bodies 3 is calculated according to an expression shown below given that 1 denotes a distance from the fulcrum P of reciprocating movements of each of the mass bodies 3 to the center of gravity G of each of the mass bodies 3, namely, the length of an arm of a pendulum, and that r denotes a distance between the fulcrum P and the rotation center $O_0$ of the rotating body 2.

$$n = (r/l)^{1/2}$$

By making the reciprocating movement order n of each of the mass bodies 3 coincident with the order of torsional vibrations of the rotating body 2, torsional vibrations of the rotating body 2 can be damped through reciprocating movements of each of the mass bodies 3. For example, in the case of a four-cylinder engine, the order of torsional vibrations to be damped is "2". Therefore, by setting the ratio of the distance r to the length 1 of the arm of the pendulum equal to "4" in the aforementioned expression, the order n of reciprocating movements of each of the mass bodies 3 becomes equal to "2". On the other hand, for example, in the case of a two-cylinder engine, the order of torsional vibrations to be damped is "1". By setting the ratio of the distance r to the length l of the arm of the pendulum equal to "2", the order n of reciprocating movements of each of the mass bodies 3 becomes equal to "1". In this manner, the order n of reciprocating movements of each of the mass bodies 3 is reduced as the number of cylinders of the engine that generates a torque decreases. In the case where the order n of reciprocating movements of each of the mass bodies 3 is small, the length l of the arm of the pendulum with respect to the distance r is long, and therefore, the amplitude of each of the mass bodies 3 is large.

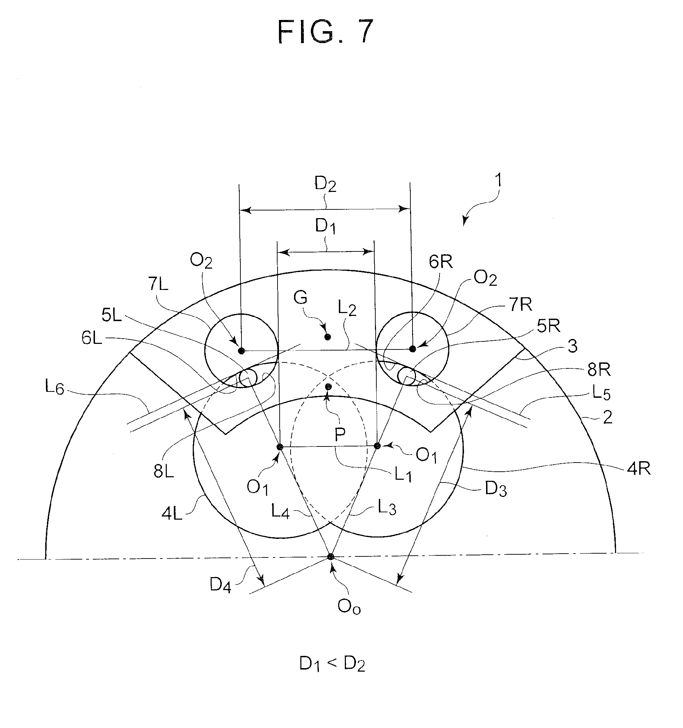

FIG. 7 schematically shows an example in which part of the configuration of the torsional vibration damping device 1 shown in FIG. 1 is changed. The example shown herein is an example in which the guide faces 6R and 6L and the attachment faces 8R and 8L are formed such that the curvature of the guide faces 6R and 6L is smaller than the curvature of the attachment faces 8R and 8L. The respective guide faces 6R and 6L are formed as circular arc faces with a certain curvature, and the respective first hollow portions 4R and 4L are formed with the radius thereof equal to the radius of curvature thereof. In the example shown in FIG. 7, the respective first hollow portions 4R and 4L partially overlap with each other. Thus, the hollow regions of the respective first hollow portions 4R and 4L are coupled to each other. The attachment faces 8R and 8L shown in FIG. 7 and the attachment faces 8R and 8L shown in FIG. 1 are formed such that the curvature of the attachment faces 8R and 8L shown in FIG. 7 and the curvature of the attachment faces 8R and 8L shown in FIG. 1 are equal to each other. In the example shown in FIG. 7 as well, there is adopted a design in which a distance $D_1$ between the centers $O_1$ of curvature of the guide faces 6R and 6L at the neutral position is shorter than a distance $D_2$ between the centers $O_2$ of curvature of the attachment faces 8R and 8L. Besides, at the neutral position, as shown in FIG. 7, the length of a line $L_3$ that links the axis of rotation of the support pin 5R and the rotation center $O_0$ of the rotating body 2 with each other, namely, a distance $D_3$ therebetween and the length of a line $L_4$ that links the axis of rotation of the support pin 5L and the rotation center $O_0$ of the rotating body 2 with each other, namely, a distance $D_4$ therebetween are equal to each other.

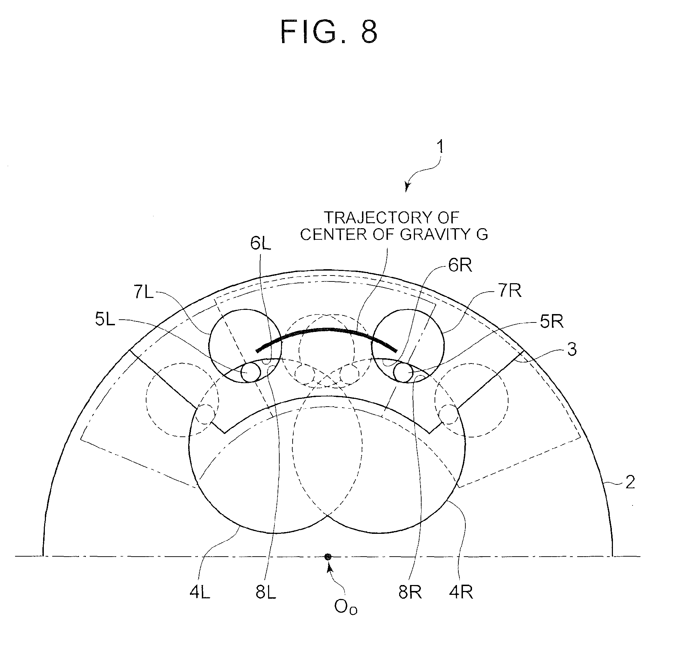

Then, in the case where the rotating body 2 undergoes torsional vibrations, for example, if each of the mass bodies 3 is offset rightward in FIG. 7 from the neutral position, the support pin 5R rolls rightward and downward in FIG. 7 along the guide face 6R, and approaches the rotation center $O_0$ of the rotating body 2. Thus, the length of the line $l_3$ that links the support pin 5R and the rotation center $O_0$ with each other in the case where the support pin 5R has thus rolled, namely, the distance $d_3$ therebetween is shorter than the distance $D_3$ at the neutral position. In contrast, the support pin 5L rolls rightward and upward in FIG. 7 along the guide face 6L. As a result, the support pin 5L moves away from the rotation center $O_0$ of the rotating body 2. Therefore, the length of the line $l_4$ that links the support pin 5L and the rotation center $O_0$ with each other in the case where the support pin 5L has thus rolled, namely, the distance $d_4$ therebetween is longer than the distance $D_3$ at the neutral position. As a result, each of the mass bodies 5 rotates such that the right region of each of the mass bodies 3 is directed toward the rotation center $O_0$ side of the rotating body 2. Therefore, each of the mass bodies 3 moves in such a manner as to be entangled toward the rotation center $O_0$ side along the circumferential direction of the rotating body 2. Incidentally, in the case where each of the mass bodies 3 is offset leftward from the neutral position as well, each of the mass bodies 5 rotates such that the left region of each of the mass bodies 3 is directed toward the rotation center $O_0$ side of the rotating body 2 according to a similar principle. Accordingly, in the example shown in FIG. 7 as well, each of the mass bodies 3 can thus be caused to make reciprocating movements along the circumferential direction of the rotating body 2. FIG. 8 schematically shows a state where each of the mass bodies 3 shown in FIG. 7 makes reciprocating movements.

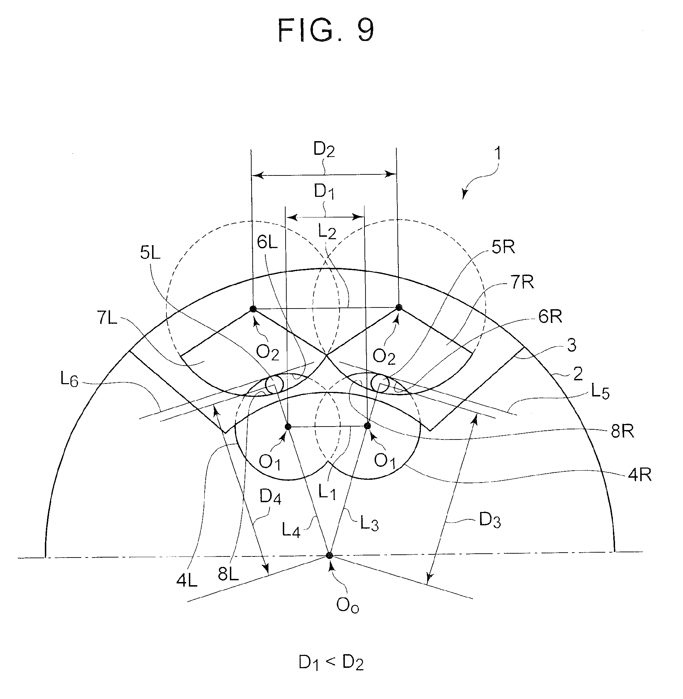

FIG. 9 schematically shows another example in which part of the configuration of the torsional vibration damping device 1 shown in FIG. 1 is changed. The example shown herein is an example in which the second hollow portions 7R and 7L are formed in the shape of a fan, and the attachment faces 8R and 8L and the guide faces 6R and 6L are formed such that the curvature of the attachment faces 8R and 8L is larger than the curvature of the guide faces 6R and 6L. Besides, the guide faces 6R and 6L are formed as circular arc faces with a certain curvature that is equal to the curvature of the guide faces 6R and 6L shown in FIG. 1, and the respective first hollow portions 4R and 4L are formed with a radius equal to the radius of curvature thereof. Besides, as shown in FIG. 9, the respective first hollow portions 4R and 4L partially overlap with each other, and hence, the hollow regions of the respective first hollow portions 4R and 4L are coupled to each other. In the example shown in FIG. 9 as well, there is adopted a design in which the distance $D_1$ between the centers $O_1$ of curvature of the guide faces 6R and 6L at the neutral position is shorter than the distance $D_2$ between the centers $O_2$ of curvature of the attachment faces 8R and 8L. Besides, the length of the line $L_3$ that links the axis of rotation of the support pin 5R and the rotation center $O_0$ of the rotating body 2 with each other at the neutral position, namely, the distance $D_3$ therebetween and the length of the line $L_4$ that links the axis of rotation of the support pin 5L and the rotation center $O_0$ of the rotating body 2 with each other, namely, the distance $D_4$ therebetween are equal to each other.

Then, in the case where the rotating body 2 undergoes torsional vibrations, for example, if each of the mass bodies 3 is offset rightward in FIG. 9 from the neutral position, the support pin 5R rolls rightward and downward in FIG. 9 along the guide face 6R. As a result, the support pin 5R approaches the rotation center $O_0$ of the rotating body 2. Therefore, the length of the line $l_3$ that links the support pin 5R and the rotation center $O_0$ with each other in the case where the support pin 5R has thus rolled, namely, the distance $d_3$ therebetween is shorter than the distance $D_3$ at the neutral position. In contrast, the support pin 5L rolls rightward and upward in FIG. 9 along the guide face 6L. As a result, the support pin 5L moves away from the rotation center $O_0$ of the rotating body 2. Therefore, the length of the line $l_4$ that links the support pin 5L and the rotation center $O_0$ with each other in the case where the support pin 5L has thus rolled, namely, the distance $d_4$ therebetween is longer than the distance $D_3$ at the neutral position. As a result, each of the mass bodies 5 rotates such that the right region of each of the mass bodies 3 is directed toward the rotation center $O_0$ side of the rotating body 2. Therefore, each of the mass bodies 3 moves in such a manner as to be entangled toward the rotation center $O_0$ side along the circumferential direction of the rotating body 2. Incidentally, in the case where each of the mass bodies 3 is offset leftward from the neutral position as well, each of the mass bodies 5 rotates such that the left region of each of the mass bodies 3 is directed toward the rotation center $O_0$ side of the rotating body 2, according to a similar principle. Accordingly, in the example shown in FIG. 9 as well, each of the mass bodies 3 can be caused to make reciprocating movements along the circumferential direction of the rotating body 2.

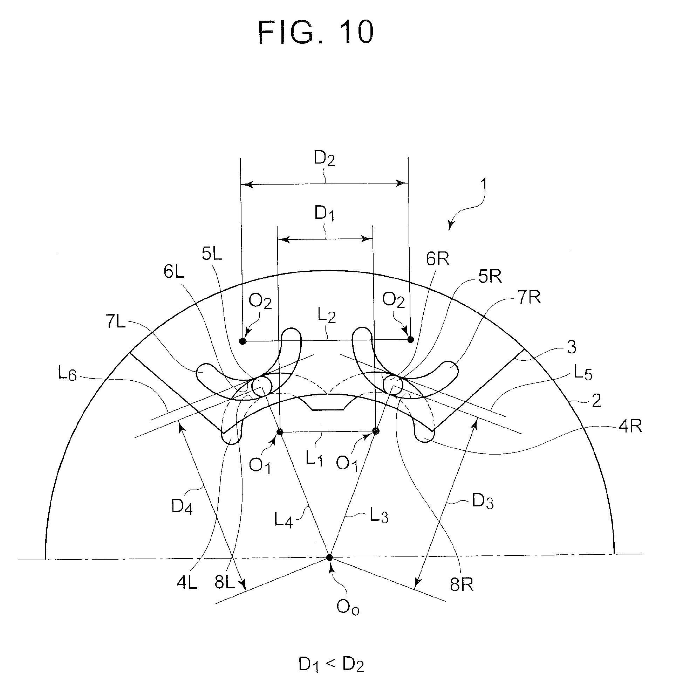

FIG. 10 schematically shows still another example in which part of the configuration of the torsional vibration damping device 1 shown in FIG. 1 is changed. The example shown herein is an example in which the guide faces 6R and 6L with the same curvature as that of the guide faces 6R and 6L shown in FIG. 1 are formed in the first hollow portions 4R and 4L respectively, and the space in which the support pins 5 can move is reduced in the first hollow portions 4R and 4L. In addition, this is an example in which the attachment faces 8R and 8L with the same curvature as that of the attachment faces 8R and 8L shown in FIG. 1 are formed in the second hollow portions 7R and 7L respectively, and the space in which the support pins 5 can move is reduced in the second hollow portions 7R and 7L. As shown in FIG. 10, the first hollow portions 4R and 4L are formed in the shape of a curved fan. The first hollow portions 4R and 4L are formed such that the width of the hollow regions thereof is equal to or slightly larger than the outer diameter of the support pins 5. Outer faces of the inner peripheral edges of the first hollow portions 4R and 4L in the radial direction of the rotating body 2 serve as the guide faces 6R and 6L respectively. Besides, in the example shown in FIG. 10, the respective first hollow portions 4R and 4L partially overlap with each other, and hence the hollow regions of the respective first hollow portions 4R and 4L are coupled to each other. As shown in FIG. 10, the second hollow portions 7R and 7L are formed symmetrically to the first hollow portions 4R and 4L respectively, and are formed such that the width of the hollow regions thereof is equal to or slightly larger than the outer diameter of the support pins 5. Inner faces of inner peripheral edges of the second hollow portions 7R and 7L2 in the radial direction of the rotating body 2 serve as the attachment faces 8R and 8L respectively. That is, the example shown in FIG. 10 is configured substantially in the same manner as the example shown in FIG. 1, except that the first hollow portions 4R and 4L and the second hollow portions 7R and 7L are changed in shape as described above.

Accordingly, in the example shown in FIG. 10, in addition to the effect achieved by the torsional vibration damping device 1 configured as shown in FIG. 1, free movements of the support pins 5R and 5L are limited. Therefore, even if the rotating body 2 is caused to vibrate in, for example, a vertical direction of FIG. 10, the support pins 5R and 5L can be restrained from colliding with the inner wall faces of the first hollow portions 4R and 4L or the inner wall faces of the second hollow portions 7R and 7L respectively due to the vibrations in the vertical direction. Besides, even if the support pins 5R and 5L collide with the inner wall faces of the first hollow portions 4R and 4L and the inner wall faces of the second hollow portions 7R and 7L respectively, these spaces are limited, and hence vibrations caused by the collision and generated noise can be reduced. Furthermore, by reducing the spaces of the second hollow portions 7R and 7L, the mass of each of the mass bodies 3 can be increased, and hence the vibration damping performance can be improved.

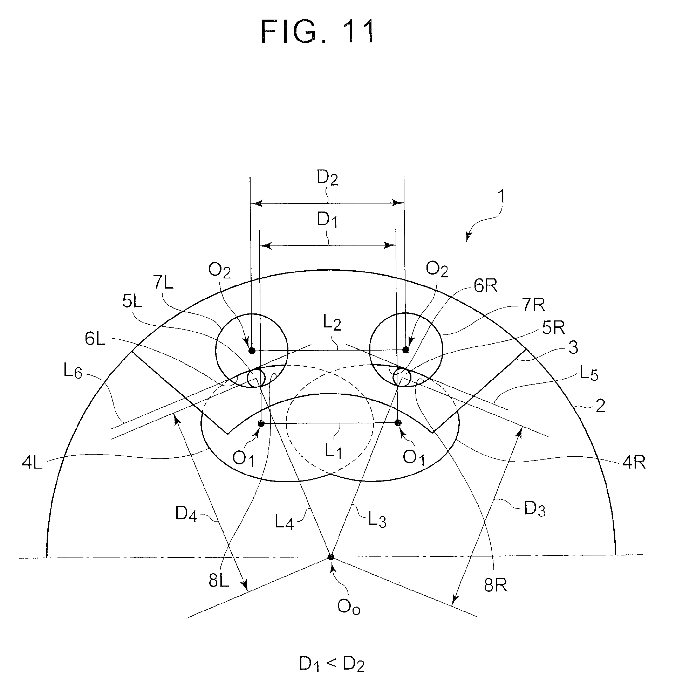

FIG. 11 schematically shows an example in which part of the configuration of the torsional vibration damping device 1 shown in FIG. 7 is changed. The example shown herein is an example in which the guide faces 6R and 6L shown in FIG. 7 are formed as cycloid faces whose curvature continuously changes. In the example shown in FIG. 11, the respective first hollow portions 4R and 4L partially overlap with each other, and hence the hollow regions of the respective first hollow portions 4R and 4L are coupled to each other. In the example shown in FIG. 11, there is adopted a design in which the distance $D_1$ between the centers $O_1$ of curvature (i.e., instantaneous centers) of the guide faces 6R and 6L with which the support pins 5R and 5L are in contact respectively at the neutral position is shorter than the distance $D_2$ between the centers $O_2$ of curvature of the attachment faces 8R and 8L. In the case where the rotating body 2 undergoes torsional vibrations, for example, if each of the mass bodies 3 is offset rightward in FIG. 11 from the neutral position, the support pin 5R rolls along the guide face 6R. The guide faces 6R and 6L shown in FIG. 11 are formed such that the curvature of both right and left end sides of the inner wall faces of the guide faces 6R and 6L is larger than the curvature of upper and lower sides of the guide faces 6R and 6L. Thus, the curvature of the guide face 6R on which the support pin 5R rolls increases as each of the mass bodies 3 is offset rightward in FIG. 11 from the neutral position. That is, the support pin 5R gradually approaches the rotation center $O_0$ of the rotating body 2. Therefore, in the example shown in FIG. 11 as well, the length of the line $l_3$ that links the support pin 5R and the rotation center $O_0$ with each other in the case where the support pin 5R has thus rolled, namely, the distance $d_3$ therebetween is shorter than the distance $D_3$ at the neutral position. In contrast, the curvature of the guide face 6L on which the support pin 5L rolls gradually decreases. Thus, the length of the line $l_4$ that links the support pin 5L and the rotation center $O_0$ with each other in the case where the support pin 5L has thus rolled, namely, the distance $d_4$ therebetween is longer than the distance $D_4$ at the neutral position. As a result, each of the mass bodies 5 rotates such that the right region of each of the mass bodies 3 is directed toward the rotation center $O_0$ side of the rotating body 2. Therefore, each of the mass bodies 3 moves in such a manner as to be entangled toward the rotation center $O_0$ side along the circumferential direction of the rotating body 2. Incidentally, in the case where each of the mass bodies 3 is offset leftward from the neutral position as well, each of the mass bodies 5 rotates such that the left region of each of the mass bodies 3 is directed toward the rotation center $O_0$ side of the rotating body 2, according to a similar principle. Accordingly, in the example shown in FIG. 11 as well, each of the mass bodies 3 can make reciprocating movements along the circumferential direction of the rotating body 2.

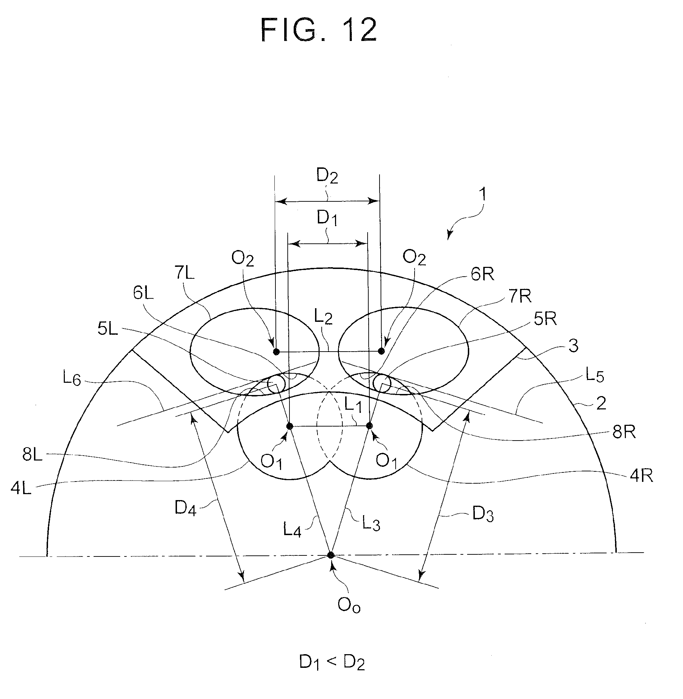

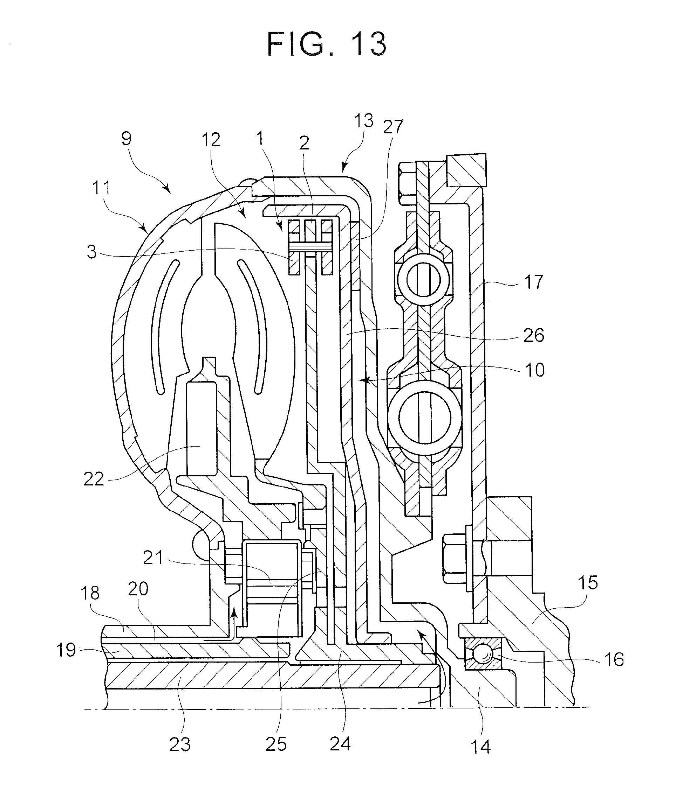

FIG. 12 schematically shows an example in which part of the configuration of the torsional vibration damping device 1 shown in FIG. 9 is changed. The example shown herein is an example in which the attachment faces 8R and 8L shown in FIG. 9 are formed as cycloid faces whose curvature continuously changes. In the example shown in FIG. 12, the respective first hollow portions 4R and 4L partially overlap with each other, and hence the hollow regions of the respective first hollow portions 4R and 4L are coupled to each other. In the example shown in FIG. 12, there is adopted a design in which the distance $D_1$ between the centers $O_1$ of curvature of the guide faces 6R and 6L at the neutral position is shorter than the distance $D_2$ between the centers $O_2$ of curvature (i.e., instantaneous centers) of the attachment faces 8R and 8L with which the support pins 5R and 5L are in contact respectively. In the case where the rotating body 2 undergoes torsional vibrations, for example, if each of the mass bodies 3 is offset rightward in FIG. 12 from the neutral position, the support pin 5R rolls rightward and downward in FIG. 12 along the guide face 6R. That is, the support pin 5R approaches the rotation center $O_0$ of the rotating body 2. Therefore, in the example shown in FIG. 12 as well, the length of the line $l_3$ that links the support pin 5R and the rotation center $O_0$ with each other in the case where the support pin 5R has thus rolled, namely, the distance $d_3$ therebetween is shorter than the distance $D_3$ at the neutral position. In contrast, the support pin 5L rolls rightward and upward in FIG. 13 along the guide face 6L. That is, the support pin 5L moves away from the rotation center $O_0$ of the rotating body 2. Therefore, the length of the line $l_4$ that links the support pin 5L and the rotation center $O_0$ with each other in the case where the support pin 5L has thus rolled, namely, the distance $d_4$ therebetween is shorter than the distance $D_4$ at the neutral position. As a result, each of the mass bodies 5 rotates such that the right region of each of the mass bodies 3 is directed toward the rotation center $O_0$ side of the rotating body 2. Therefore, each of the mass bodies 3 moves in such a manner as to be entangled toward the rotation center $O_0$ side along the circumferential direction of the rotating body 2. Incidentally, in the case where each of the mass bodies 3 is offset leftward from the neutral position as well, each of the mass bodies 5 rotates such that the left region of each of the mass bodies 3 is directed toward the rotation center $O_0$ side of the rotating body 2, according to a similar principle. Accordingly, in the example shown in FIG. 12 as well, each of the mass bodies 3 can be caused to make reciprocating movements along the circumferential direction of the rotating body 2.

By the way, the torsional vibration damping device 1 according to this invention can be used for various rotating bodies to which torsional vibrations are input, and can damp the torsional vibrations. As an example, FIG. 13 shows an example in which the torsional vibration damping device 1 is built in a fluid coupling. The example shown herein is an example in which the torsional vibration damping device 1 according to this invention is built in a torque converter 9. The torque converter 9 is equipped with a configuration similar to that of a torque converter with a lockup clutch 10 that is conventionally mounted widely in vehicles. That is, a pump impeller 11 as an input-side member is configured by attaching annularly arranged pump blades to an inner face of a pump shell, and a turbine runner 12 is arranged opposed to the pump impeller 11. This turbine runner 12 has a shape substantially symmetrical to the pump impeller 11, and is configured by fixing a multitude of annularly arranged turbine blades to an inner face of an annular shell. Accordingly, this pump impeller 11 and this turbine runner 12 are arranged opposed to each other on the same axis.

A front cover 13 that covers an outer peripheral side of the turbine runner 12 is integrally joined to an outer peripheral end of the pump shell. As shown in FIG. 13, this front cover 13 is a so-called bottomed cylinder member having a front wall portion that is opposed to an inner face of the pump shell. A shaft portion 14 is protrusively formed at a central portion of an outer face of the front wall portion. The shaft portion 14 is inserted in a tip portion of an output shaft 15 of an engine (not shown), and is relatively rotatably coupled to the output shaft 15 via a bearing 16. Besides, a drive plate 17 is attached to the output shaft 15, and the drive plate 17 and the front cover 13 are coupled to each other via a damper.

Besides, a cylinder shaft 18 is integrally provided at an inner peripheral end of the pump shell. The cylinder shaft 18 extends to a back face side of the pump shell (the other side of the engine side), and is coupled to an oil pump (not shown). A stationary shaft 19 whose outer diameter is smaller than an inner diameter of the cylinder shaft 18 is inserted inside the cylinder shaft 18, and a tip portion of the stationary shaft 19 extends to the interior of the torque converter 9 that is surrounded by the pump shell 4 and the front cover 13. This stationary shaft 19 is a hollow shaft-like region that is formed integrally with a stationary wall portion (not shown) that retains the oil pump, and a space between an outer peripheral face of this stationary shaft 19 and an inner peripheral face of the cylinder shaft 18 serves as an oil passage 20.

The tip portion of the stationary shaft 19 is located on an inner peripheral side of the foregoing turbine runner 12 or on an inner peripheral side in a region between the pump impeller 11 and the turbine runner 12. An inner race of a one-way clutch 21 is spline-fitted to the tip portion of this stationary shaft 19. Besides, a stator 22 that is arranged between an inner peripheral portion of the foregoing pump impeller 11 and an inner peripheral portion of the turbine runner 12 that is opposed thereto is attached to an outer race of the one-way clutch 21.

An input shaft 23 of a transmission (not shown) is rotatably inserted on an inner peripheral side of the aforementioned stationary shaft 19. A tip portion of the input shaft 23 protrudes from the tip portion of the stationary shaft 19 to extend to the vicinity of an inner face of the front cover 13. A hub shaft 24 is spline-fitted to a tip outer peripheral portion of the input shaft 23 that protrudes from the stationary shaft 19. This hub shaft 24 is provided with a flange-like hub 25 that protrudes on the outer peripheral side. The foregoing turbine runner 12 is coupled to the hub 25 in such a manner as to be integrated with the hub 25. Then, the foregoing rotating body 2 is integrated with the hub shaft 24.

The lockup clutch 10 is provided opposed to the inner face of the front cover 13. This lockup clutch 10 is designed to couple a driving-side member and a driven-side member to each other by mechanical means in a manner that enables torque transmission, in the same manner as conventionally known lockup clutches. In the example shown in FIG. 13, the lockup clutch 10 is configured to couple the hub shaft 24 and the front cover 13 to each other. That is, the lockup clutch 10 is mainly constituted of a disc-like lockup piston 26 that is arranged between the torsional vibration damping device 1 and the inner face of the front cover 13. The lockup piston 26 is spline-fitted to the aforementioned hub shaft 24. Besides, a friction material 27 that is pressed against the front cover 13 to generate a frictional force is attached to an outermost peripheral location of a lateral face that is opposed to the front cover 13 of the lockup piston 26. Furthermore, the outer diameter of the lockup piston 26 is an outer diameter that is slightly smaller than an inner diameter of the front cover 13. A cylinder portion that extends in the axial direction along the inner peripheral face of the front cover 13 is formed at an outer peripheral end of the lockup piston 26. Accordingly, the lockup piston 26 is configured as follows. The lockup piston 26 is pressed rightward in FIG. 13, and the friction material 27 of the lockup piston 26 comes into contact with the front cover 13. The lockup piston 26 thereby assumes an engaged state to transmit a torque between the front cover 13 and the hub shaft 24. Besides, the lockup piston 26 is pressed back leftward in FIG. 13. The friction material 27 of the lockup piston 26 thereby moves away from the front cover 13, and the lockup piston 26 assumes a released state to shut off the transmission of the torque.

In addition, the interior of the casing that is constituted of the aforementioned front cover 13 and the pump shell integrated therewith is filled with oil. Accordingly, the rotating body 2 and the mass bodies 5 are immersed in the oil. As described above, the rotating body 2 is integrated with the hub shaft 24 to which the lockup piston 26 is spline-fitted. When the lockup clutch 10 assumes an engaged state, the torque output by the engine is transmitted to the rotating body 2 via the front cover 13 and the lockup clutch 10 that is engaged therewith. Accordingly, in the case where the rotating body 2 has undergone torsional vibrations due to periodical fluctuations in the output torque of the engine, the mass bodies 5 make reciprocating movements as described above, and torsional vibrations are damped. In that case, since the rotating body 2 and the mass bodies 5 are immersed in oil. In other words, therefore, the contact portions between the support pins 5 and the guide faces 6, and the contact portions between the support pins 5 and the attachment faces 8 are lubricated by oil. Besides, an impact that is caused when the support pins 5 and the guide faces 6 come into abutment on each other respectively and when the support pins 5 and the attachment faces 8 come into abutment on each other respectively can be abated by oil. Therefore, the durability of the device as a whole can be enhanced.

**Claims**

1. A torsional vibration damping device in which a mass body that allows a centrifugal force to be generated through rotation of a rotating body, which rotates upon receiving a torque, and that is caused to make pendular movements through torsional vibrations of the rotating body is attached to the rotating body in such a manner as to rock with respect to the rotating body by two support pins that are spaced apart from each other in a circumferential direction of the rotating body, on an outer peripheral side of the rotating body in a radial direction with respect to a rotation center of the rotating body, the torsional vibration damping device **characterized in that**:

   the torsional vibration damping device includes two first hollow portions which are formed in an outer peripheral portion of the rotating body at positions corresponding to the respective support pins and into which the respective support pins are inserted, and two second hollow portions which are formed in the mass body at positions opposed to the respective first hollow portions and in which the respective support pins are inserted;
   guide faces on which the respective support pins roll are formed on outer sides of inner peripheral edges of the respective first hollow portions in the radial direction with respect to the rotation center of the rotating body;
   attachment faces on which the respective support pins roll are formed on inner sides of inner peripheral edges of the respective second hollow portions in the radial direction with respect to the rotation center of the rotating body, wherein each of the support pin is sandwiched between the corresponding attachment face and the corresponding guide face in a case where the mass body has received a load directed toward an outer peripheral side of the rotating body due to the centrifugal force;
   each of the guide faces and each of the attachment faces are formed as recessed curved faces in such a manner as to enclose the corresponding support pin inside; and
   a distance between centers of curvature of the guide faces is shorter than a distance between centers of curvature of the attachment faces.

2. The torsional vibration damping device according to claim 1, **characterized in that**:

   the respective guide faces are formed as recessed curved faces with a certain curvature, or as recessed curved faces in which a curvature of one of the guide faces with which one of the support pins is in contact and a curvature of the other guide face with which the other support pin is in contact are different from each other in a case where the mass body makes reciprocating movements; and
   the respective attachment faces are formed as recessed curved faces with a certain curvature, or as recessed curved faces in which a curvature of one of the attachment faces with which one of the support pins is in contact and a curvature of the other attachment face with which the other support pin is in contact are different from each other in a case where the mass body vibrates.

3. The torsional vibration damping device according to claim 1 or 2, **characterized in that**:

   The torsional vibration damping device includes a fluid coupling in which a pump impeller and a turbine runner, which transmit a torque via oil, are accommodated inside a casing; and
   the rotating body and the mass body are accommodated inside the casing.

4. The torsional vibration damping device according to any one of claims 1 to 3, **characterized in that** a ratio of a distance between the rotation center of the rotating body and a fulcrum of reciprocating movements of the mass body to a distance between the fulcrum of reciprocating movements of the mass body and a center of gravity of the mass body is set to 1 or 4.

# FIG. 1

$D_1 < D_2$

# FIG. 2

# FIG. 3

# FIG. 4

TRAJECTORY OF
PENDULUM

$D_4 < d_4$    $O_0$    $D_3 > d_3$

# FIG. 5

TRAJECTORY OF
PENDULUM

# FIG. 6

TRAJECTORY OF
CENTER OF
GRAVITY G

# FIG. 7

$D_1 < D_2$

# FIG. 8

# FIG. 9

$$D_1 < D_2$$

# FIG. 10

$D_1 < D_2$

# FIG. 11

$D_1 < D_2$

# FIG. 12

$$D_1 < D_2$$

# FIG. 13

<table>
<tr><td colspan="2" align="center">**INTERNATIONAL SEARCH REPORT**</td><td colspan="2">International application No.<br>PCT/JP2012/053120</td></tr>
</table>

**A. CLASSIFICATION OF SUBJECT MATTER**
*F16F15/14*(2006.01)i, *F16F15/10*(2006.01)i, *F16F15/131*(2006.01)i, *F16H45/02*(2006.01)i

According to International Patent Classification (IPC) or to both national classification and IPC

**B. FIELDS SEARCHED**

Minimum documentation searched (classification system followed by classification symbols)
F16F15/14, F16F15/10, F16F15/131, F16H45/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Microfilm of the specification and drawings annexed to the request of Japanese Utility Model Application No. 80506/1984(Laid-open No. 196045/1985) (Toyota Motor Corp.), 27 December 1985 (27.12.1985), entire text; all drawings (Family: none) | 1-4 |
| A | Microfilm of the specification and drawings annexed to the request of Japanese Utility Model Application No. 169185/1982(Laid-open No. 73654/1984) (Toyota Motor Corp.), 18 May 1984 (18.05.1984), entire text; all drawings (Family: none) | 1-4 |

☒ Further documents are listed in the continuation of Box C. ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 April, 2012 (25.04.12) | Date of mailing of the international search report<br>15 May, 2012 (15.05.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/053120 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Microfilm of the specification and drawings annexed to the request of Japanese Utility Model Application No. 133620/1980(Laid-open No. 58151/1982) (Toyota Motor Co., Ltd.), 06 April 1982 (06.04.1982), entire text; all drawings (Family: none) | 1-4 |
| A | JP 2011-185305 A  (Toyota Motor Corp.), 22 September 2011 (22.09.2011), entire text; all drawings (Family: none) | 4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011504987 W
- JP 2011504987 A
- JP 2011504986 W
- JP 2011504986 A